# EUROPEAN PATENT APPLICATION

(11) **EP 4 821 706 A1**
(43) Date of publication of application: **14.10.2026**
(21) Application number: 25191815.7
(22) Date of filing: 25.07.2025
(51) Int. Cl.: B60C 19/00, G06K 19/077, H01Q 1/22, B60C 5/14, B60C 9/18, B60C 15/00, B60C 15/06

(54) **PNEUMATIC TIRE**

(30) Priority: 09.04.2025 KR 20250046289
(71) Applicant: Kumho Tire Co., Inc., Gwangju 62392 (KR)
(72) Inventor: YOU, Youngbum, 62392 Gwangju (KR)
(74) Representative: BCKIP Part mbB

(57) **Abstract**

A pneumatic tire includes: a tire body; and an electromagnetic tag disposed inside the tire body. The tire body includes: a bead composed of a plurality of wires; and a bead filler positioned radially outward of the bead. The electromagnetic tag is disposed to be spaced apart from an end of the bead filler by a predetermined distance.

## Description

### TECHNICAL FIELD

The present disclosure relates to a pneumatic tire.

### BACKGROUND

Recently, in the tire industry, the technology of attaching RFID (radio-frequency identification) tags to tires has been widely used to track tire manufacturing history, performance data, usage conditions, and more. Electromagnetic tags can read and record tire information in a non-contact manner using radio frequencies, which can greatly improve the efficiency of tire management. The electromagnetic tag is generally disposed inside the tire and protected from the external environment, and is required to operate reliably even under various physical stresses encountered during the tire manufacturing process and while driving.

Conventional electromagnetic tags placed on tires are typically embedded or attached inside the tire. For example, electromagnetic tags are often attached to the surface of the inner liner of the tire or inserted inside the reinforcing layer of the tire.

However, if the location of the electromagnetic tag is inappropriate, the electromagnetic tag may be damaged by deformation or stress generated during driving, resulting in degraded signal transmission and reception performance of the electromagnetic tag.

In particular, the area near the belt of the tire is known to undergo significant deformation. Therefore, if the electromagnetic tag is placed too close to the belt edge, it is highly likely to be damaged due to deformation. Conversely, if the electromagnetic tag is placed too far from the belt edge, there may be a problem of reduced signal transmission and reception efficiency of the electromagnetic tag.

In addition, the electromagnetic tag is required to be protected from external environments such as heat, moisture, and impact, which occur during the tire vulcanization process and while driving. Conventionally, a method of protecting the electromagnetic tag by coating it with a rubber material has been used. However, there has been a problem in that differences in the physical and chemical properties between the coating material and other components of the tire may lead to reduced adhesion or durability issues.

### SUMMARY

In view of the above, the present disclosure provides a pneumatic tire capable of preventing damage to an electromagnetic tag due to deformation of the tire by spacing the electromagnetic tag apart from the end of a bead filler.

In addition, the present disclosure provides a pneumatic tire capable of preventing the electromagnetic tag from being detached or damaged during the tire vulcanization process and while driving by topping the outer surface of the electromagnetic tag with rubber.

In accordance with one aspect of the present disclosure, there is provided a pneumatic tire including: a tire body; and an electromagnetic tag disposed inside the tire body, wherein the tire body includes: a bead composed of a plurality of wires; and a bead filler positioned radially outward of the bead, and wherein the electromagnetic tag is disposed to be spaced apart from an end of the bead filler by a predetermined distance.

Further, the electromagnetic tag may have a predetermined width and is arranged to extend along a circumferential direction of the tire, and the distance between the electromagnetic tag and the end of the bead filler may be smaller than a height of the bead filler.

Further, the electromagnetic tag may be disposed within a range of 5 mm to 10 mm from the end of the bead filler.

Further, the tire body may further include: a carcass arranged to be turned up along an outer side of the bead; and an inner liner that supports the carcass, and wherein the electromagnetic tag is arranged on an exposed surface of the inner liner so as to be disposed within a range of 5 mm to 10 mm from the end of the bead filler.

Further, the tire body may further include a carcass arranged to be turned up along an outer side of the bead, wherein the carcass may include: a carcass main portion disposed inward of the bead; and a carcass turn-up portion that is turned up from the carcass main portion and extends outward of the carcass main portion, and the electromagnetic tag may be disposed on an outer surface of the carcass turn-up portion.

Further, the tire body may further include: a tread; and a belt supporting an inner side of the tread, and the belt may include a belt body including a steel cord, and a belt topping rubber coated on an outer surface of the belt body.

Further, the electromagnetic tag may include a tag body containing the same component as the belt body, and a tag topping rubber coated on an outer surface of the tag body, and the tag topping rubber may be formed of the same material as the belt topping rubber.

Further, the electromagnetic tag may further include a brass coating layer coated on the outer surface of the tag body, and the brass coating layer may have a weight ratio of copper and zinc of 62:38 to 70:30.According to embodiments of the present disclosure, it is possible to minimize physical damage to the electromagnetic tag even under repeated deformation of the tire during driving.

In addition, according to embodiments of the present disclosure, by topping the outer surface of the electromagnetic tag with rubber, it is possible to prevent the electromagnetic tag from being detached or damaged during the tire vulcanization process and while driving.

### BRIEF DESCRIPTION OF THE DRAWINGS

FIG. 1 is a cross-sectional view of a pneumatic tire according to a first embodiment of the present disclosure, which shows a cross-section perpendicular to the circumferential direction of the tire.
FIG. 2 is an enlarged view of part A in FIG. 1.
FIG. 3 is an enlarged view of part B in FIG. 1.
FIG. 4 is a cross-sectional view taken along line IV-IV of FIG. 1.
FIG. 5 is a cross-sectional view of a pneumatic tire according to a second embodiment of the present disclosure, which shows a cross-section perpendicular to the circumferential direction of the tire.
FIG. 6 is a cross-sectional view taken along line VI-VI of FIG. 5.
FIG. 7 is a stress distribution diagram of a pneumatic tire of the present disclosure.
FIG. 8 is a stress distribution diagram of another pneumatic tire of the present disclosure.

### DETAILED DESCRIPTION

Hereinafter, specific embodiments for implementing a spirit of the present disclosure will be described in detail with reference to the drawings.

In describing the present disclosure, detailed descriptions of known configurations or functions may be omitted to clarify the present disclosure.

When an element is referred to as being 'connected' to, 'supported' by, 'accessed' to, 'supplied' to, 'transferred' to, or 'contacted' with another element, it should be understood that the element may be directly connected to, supported by, accessed to, supplied to, transferred to, or contacted with another element, but that other elements may exist in the middle.

The terms used in the present disclosure are only used for describing specific embodiments, and are not intended to limit the present disclosure. Singular expressions include plural expressions unless the context clearly indicates otherwise.

Further, in the present disclosure, it is to be noted that expressions, such as the upper side, the lower side, the side surface are described based on the illustration of drawings, but may be modified if directions of corresponding objects are changed. For the same reasons, some components are exaggerated, omitted, or schematically illustrated in the accompanying drawings, and the size of each component does not fully reflect the actual size.

Terms including ordinal numbers, such as first and second, may be used for describing various elements, but the corresponding elements are not limited by these terms. These terms are only used for the purpose of distinguishing one element from another element.

In the present specification, it is to be understood that the terms such as "including" are intended to indicate the existence of the certain features, areas, integers, steps, actions, elements, combinations, and/or groups thereof disclosed in the specification, and are not intended to preclude the possibility that one or more other certain features, areas, integers, steps, actions, elements, combinations, and/or groups thereof may exist or may be added.

In this specification, the term "axial direction" refers to a direction parallel to the rotational axis of the pneumatic tire, and the term "circumferential direction" refers to a direction extending along the periphery of the tread surface, which is perpendicular to the axial direction. The term "radial direction" refers to a direction perpendicular to the rotational axis of the pneumatic tire. Unless otherwise specified, each of the above directions is understood to include both the positive and negative directions.

Hereinafter, a specific configuration of a pneumatic tire according to a first embodiment of the present disclosure will be described with reference to the drawings.

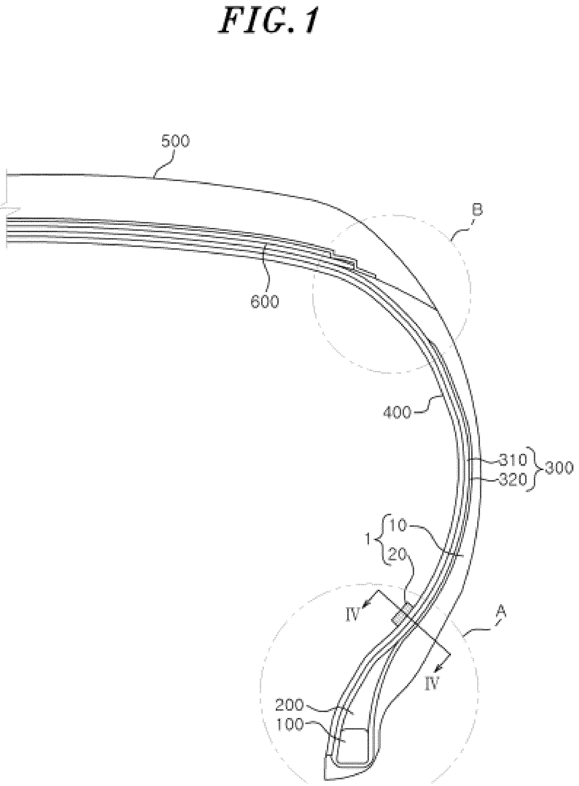

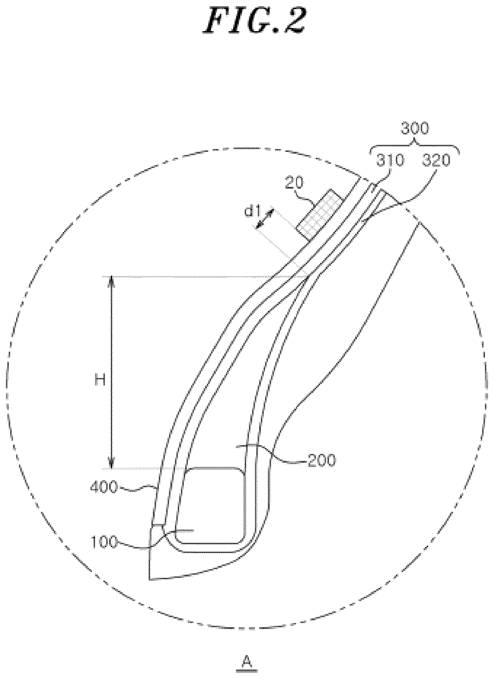

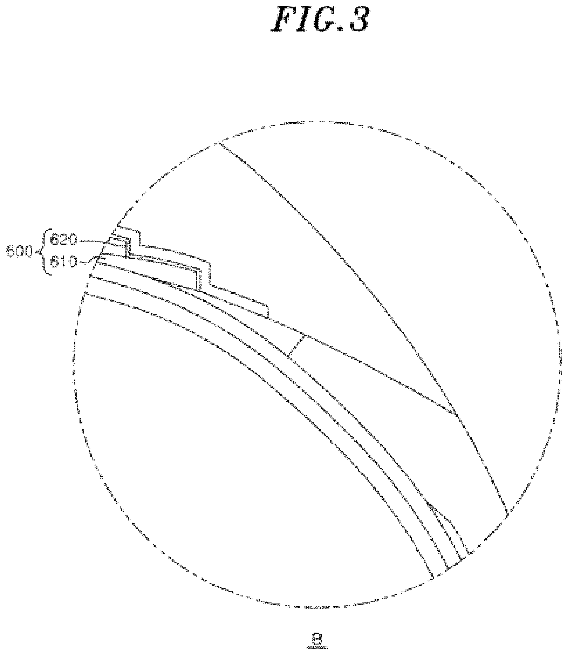

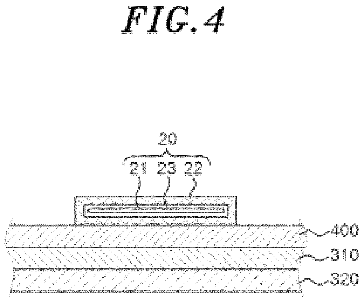

Referring to FIGS. 1 to 4, a pneumatic tire 1 according to the first embodiment of the present disclosure can be mounted on a vehicle and enable the vehicle to travel by utilizing friction generated at a portion in contact with a road surface. The pneumatic tire 1 may include a tire body 10 and an electromagnetic tag 20.

The tire body 10 can support the vehicle. The tire body 10 may have a ring-shaped structure. The tire body 10 may have an elastic outer surface. The tire body 10 may include a bead 100, a bead filler 200, a carcass 300, an inner liner 400, a tread 500, and a belt 600.

The bead 100 can provide rigidity for securing the tire body 10 to a rim. The bead 100 may include one or more wires, cords, cores, or the like. For example, the bead 100 may be composed of a bundle of steel wires.

The bead filler 200 can support the rigidity of the bead 100 itself and absorb shocks. The bead filler 200 can influence ride comfort and steering stability by absorbing shocks applied to the bead 100 during driving. The bead filler 200 may be positioned radially outward of the bead 100. A portion of the circumference of the bead filler 200 may be covered by the carcass 300.

The carcass 300 can form the framework of the tire body 10. The carcass 300 may cover the outer side of the bead 100. The carcass 300 may be arranged to be turned up along the outer side of the bead 100. The carcass 300 may support the belt 600. By forming a cord layer inside the pneumatic tire 1, the carcass 300 can bear loads and absorb shocks. The carcass 300 may be formed of a material with high fatigue resistance to repeated flexion-extension. For example, the carcass 300 may include a plurality of fiber cords or steel cords. The carcass 300 may form a single layer. Forming a single layer means that the carcass 300 is formed as one layer, not as a plurality of layers that are separated in the radial direction of the tire. The carcass 300 may include a carcass main portion 310 and a carcass turn-up portion 320.

The carcass main portion 310 may be disposed radially inward of the belt 600. The carcass main portion 310 may extend from the tread 500 of the tire body 10 to the bead 100. The carcass main portion 310 may support the belt 600. The carcass main portion 310 may be supported by the inner liner 400. The carcass main portion 310 may be disposed between the belt 600 and the inner liner 400. The carcass main portion 310 can form the framework of the tire body 10.

The carcass turn-up portion 320 may be turned up to surround the bead 100. In the present specification, the carcass 300 being turned up means that the carcass 300, which extends toward the radial inner direction of the tire, is bent and extended toward the radial outer direction of the tire to surround the bead 100. In this case, the carcass 300 may be extended in a U-shape to surround the bead 100. The carcass turn-up portion 320 may be extended from the end of the carcass main portion 310 that reaches the bead 100. The carcass turn-up portion 320 may be turned up from the carcass main portion 310 and extend outward of the carcass main portion 310 toward the belt 600.

The inner liner 400 can support the carcass 300. The inner liner 400 may be provided to maintain the air pressure inside the pneumatic tire 1. The inner liner 400 can prevent air from leaking out of the pneumatic tire 1. The inner liner 400 may be arranged at the innermost side of the pneumatic tire 1 and may be formed of an air-impermeable material. For example, the inner liner 400 may be formed of high-density butyl rubber or the like.

The tread 500 is arranged at the outermost side of the pneumatic tire 1 and can be in direct contact with the ground. A plurality of grooves may be formed on the outer surface of the tread 500 to control the traction force, braking force, or cornering performance of the pneumatic tire 1, and the grooves may be recessed in the outer surface of the tread 500 to a predetermined depth. For example, the shape and arrangement of the grooves may be formed in various patterns suitable for the purpose of the pneumatic tire 1.

The belt 600 can distribute external impacts applied to the outer surface of the tire body 10, such as those from the road surface. The belt 600 may be arranged between the tread 500 and the carcass 300. The belt 600 may be positioned on the radially inner side of the tread 500 and on the radially outer side of the carcass 300. The belt 600 can be supported by the carcass 300. The belt 600 may include a belt body 610 and belt topping rubber 620.

The belt body 610 may serve as a support structure for the belt 600. The belt body 610 may be formed in a plurality of layers. The belt body 610 may include a plurality of steel cords. The belt body 610 may be formed of a material with high fatigue resistance to repeated flexion-extension. The belt body 610 may be manufactured together with the belt topping rubber 620 through a rolling process. The belt topping rubber 620 may be coated on the outer surface of the belt body 610. The belt topping rubber 620 may be provided to improve the adhesion between the belt body 610 and the raw rubber of the tire body 10. The belt topping rubber 620 may contain 4 to 10 parts by weight of zinc oxide and 0.5 to 2 parts by weight of cobalt salt per 100 parts by weight of raw rubber. The zinc oxide of the belt topping rubber 620 may have a specific surface area of 4.0 to 8.5 m²/g.

The electromagnetic tag 20 may be disposed inside the tire body 10. The electromagnetic tag 20 may be spaced apart from the end of the bead filler 200 by a predetermined distance. The distance of the electromagnetic tag 20 from the end of the bead filler 200 may be smaller than a height H of the bead filler 200. The electromagnetic tag 20 may have a predetermined width and may be arranged to extend along a circumferential direction of the pneumatic tire 1. The electromagnetic tag 20 may be disposed within a range of 5 mm to 10 mm from the end of the bead filler 200. The electromagnetic tag 20 may be placed on the exposed surface of the inner liner 400. The electromagnetic tag 20 may be arranged on an exposed surface of the inner liner 400 so as to be disposed within a range of 5 mm to 10 mm from the end of the bead filler 200. The electromagnetic tag 20 may provide product information of the pneumatic tire 1, and the stored product information may be recognized externally. The electromagnetic tag 20 may include a tag body 21, a tag topping rubber 22, and a brass coating layer 23.

The tag body 21 may store code information for individual product identification of the tire. The tag body 21 may include the same component as the belt body 610. The tag body 21 may include the same steel cord as the belt body 610. The tag body 21 may be a plate-shaped semiconductor. The tag body 21 may include a memory and an antenna. For example, the antenna of the tag body 21 may include the same component as the belt body 610. The antenna of the tag body 21 may include the same steel cord as the belt body 610. The tag body 21 may be an IC chip capable of wireless transmission. The tag body 21 may be an RFID tag.

The tag topping rubber 22 may be coated on the outer surface of the tag body 21. The tag topping rubber 22 may be formed of the same material as the belt topping rubber 620. The tag topping rubber 22 may contain 4 to 10 parts by weight of zinc oxide and 0.5 to 2 parts by weight of cobalt salt per 100 parts by weight of the raw rubber of the tire body 10. The zinc oxide of the tag topping rubber 22 may have a specific surface area of 4.0 to 8.5 m²/g. The tag topping rubber 22 may have a hardness of 69 to 72 with a tolerance range of plus 2 or minus 2. The tag topping rubber 22 may have a 300% modulus value of 146 to 160 with a tolerance range of plus 15% or minus 15%. The tag topping rubber 22 may have a tensile strength of 200 kgf/cm² to 240 kgf/cm². The tag topping rubber 22 may have an elongation rate of 350% to 400%.

The brass coating layer 23 may be coated on the outer surface of the tag body 21. The brass coating layer 23 may be positioned between the tag body 21 and the tag topping rubber 22. The brass coating layer 23 may have a weight ratio of copper (Cu) and zinc (Zn) of 62:38 to 70:30.

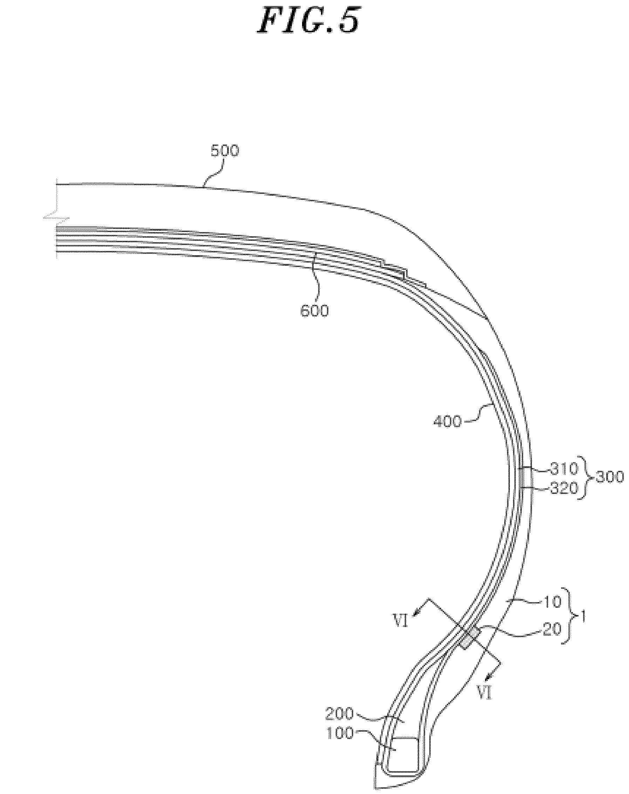

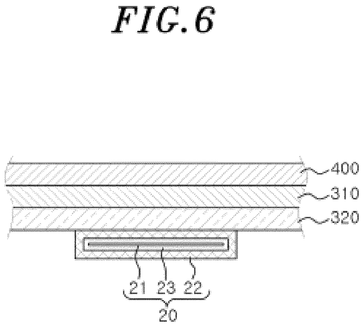

Meanwhile, in addition to the above configurations, a second embodiment of the present disclosure may also be provided. Hereinafter, the second embodiment of the present disclosure will be described with reference to FIGS. 5 and 6. In describing the second embodiment, the differences compared to the above-described embodiment will be mainly described, and descriptions identical to those in the above-described embodiment will be omitted by referring to the descriptions above.

Referring to FIGS. 5 and 6, the electromagnetic tag 20 according to the second embodiment of the present disclosure may be disposed on the outer surface of the carcass turn-up portion 320. For example, when the electromagnetic tag 20 is disposed on the upper surface of the carcass turn-up portion 320, it may be placed at a position spaced apart from the end of the bead filler 200 by a predetermined distance.

Hereinafter, the operation and effects of the pneumatic tire having the configuration described above will be described.

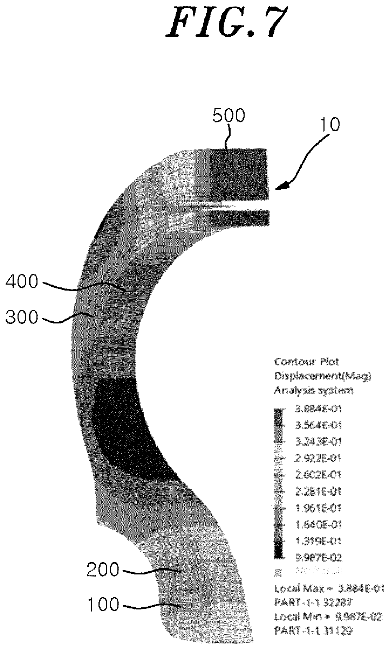

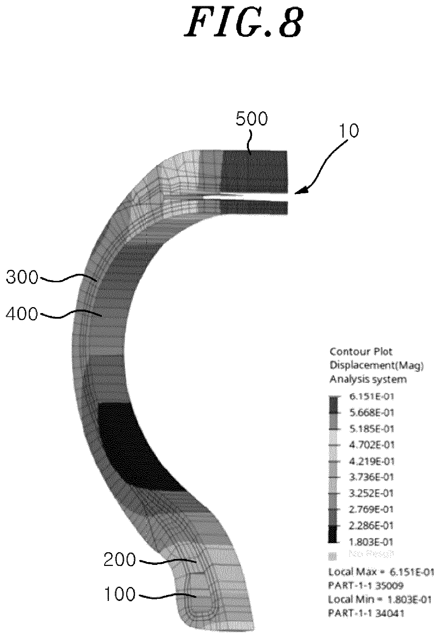

Referring to FIGS. 7 and 8, in the embodiments of the present disclosure, since the electromagnetic tag 20 is placed at a location in the tire body 10 where the stress distribution is relatively low, it is possible to minimize physical damage to the electromagnetic tag 20 even under repeated deformation of the tire during driving.

By topping the outer surface of the electromagnetic tag 20 with rubber, it is possible to prevent the electromagnetic tag 20 from being detached or damaged during the tire vulcanization process and while driving.

The brass coating layer 23 is positioned between the tag body 21 and the tag topping rubber 22 of different materials, so that the adhesion between the tag body 21 and the tag topping rubber 22 can be increased.

The examples of the present disclosure have been described above as specific embodiments, but these are only examples, and the present disclosure is not limited thereto, and should be construed as having the widest scope according to the technical spirit disclosed in the present specification. A person skilled in the art may combine/substitute the disclosed embodiments to implement a pattern of a shape that is not disclosed, but it also does not depart from the scope of the present disclosure. In addition, those skilled in the art can easily change or modify the disclosed embodiments based on the present specification, and it is clear that such changes or modifications also belong to the scope of the present disclosure.

## Claims

1. A pneumatic tire comprising:
a tire body; and
an electromagnetic tag disposed inside the tire body,
wherein the tire body includes:
a bead composed of a plurality of wires; and
a bead filler positioned radially outward of the bead, and
wherein the electromagnetic tag is disposed to be spaced apart from an end of the bead filler by a predetermined distance.

2. The pneumatic tire of claim 1, wherein the electromagnetic tag has a predetermined width and is arranged to extend along a circumferential direction of the tire, and
the distance between the electromagnetic tag and the end of the bead filler is smaller than a height of the bead filler.

3. The pneumatic tire of claim 1, wherein the electromagnetic tag is disposed within a range of 5 mm to 10 mm from the end of the bead filler.

4. The pneumatic tire of claim 2, wherein the tire body further includes:
a carcass arranged to be turned up along an outer side of the bead; and
an inner liner that supports the carcass, and
wherein the electromagnetic tag is arranged on an exposed surface of the inner liner so as to be disposed within a range of 5 mm to 10 mm from the end of the bead filler.

5. The pneumatic tire of claim 2, wherein the tire body further includes a carcass arranged to be turned up along an outer side of the bead,
wherein the carcass includes:
a carcass main portion disposed inward of the bead; and
a carcass turn-up portion that is turned up from the carcass main portion and extends outward of the carcass main portion, and
wherein the electromagnetic tag is disposed on an outer surface of the carcass turn-up portion.

6. The pneumatic tire of claim 1, wherein the tire body further includes:
a tread; and
a belt supporting an inner side of the tread, and
wherein the belt includes a belt body including a steel cord, and a belt topping rubber coated on an outer surface of the belt body.

7. The pneumatic tire of claim 6, wherein the electromagnetic tag includes a tag body containing the same component as the belt body, and a tag topping rubber coated on an outer surface of the tag body, and
the tag topping rubber is formed of the same material as the belt topping rubber.

8. The pneumatic tire of claim 7, wherein the electromagnetic tag further includes a brass coating layer coated on the outer surface of the tag body, and
the brass coating layer has a weight ratio of copper and zinc of 62:38 to 70:30.
